(19) **Europäisches Patentamt**

**European Patent Office**

**Office européen des brevets**

(11) **EP 0 696 012 B1**

(12) **EUROPEAN PATENT SPECIFICATION**

(45) Date of publication and mention
of the grant of the patent:
**03.05.2000 Bulletin 2000/18**

(51) Int Cl.$^7$: **G06K 9/00**

(21) Application number: **95304362.7**

(22) Date of filing: **21.06.1995**

(54) **Apparatus for and method of determining ridge direction patterns**

Gerät und Verfahren zur Bestimmung der Richtung von Rippenmustern

Appareil et méthode pour déterminer la direction des crêtes de formes

(84) Designated Contracting States:
**DE FR GB**

(30) Priority: **21.06.1994 JP 13883394**

(43) Date of publication of application:
**07.02.1996 Bulletin 1996/06**

(73) Proprietor: **NEC CORPORATION**
**Tokyo (JP)**

(72) Inventor: **Kamei, Toshio**
**Minato-ku, Tokyo (JP)**

(74) Representative: **Cozens, Paul Dennis et al**
**Mathys & Squire**
**100 Grays Inn Road**
**London WC1X 8AL (GB)**

(56) References cited:
**EP-A- 0 466 039**       **FR-A- 2 582 831**

## Description

This invention relates to an apparatus for and a method of determining ridge direction patterns, which are preferably used for fingerprint verification or palmprint verification.

Ridge direction patterns are important for fingerprint classification and verification, and various kindsof apparatus for determining ridge direction patterns have been proposed. But, in general, complicated processing and a large amount of operations are required in the heretofore known apparatus for determining ridge direction patterns.

Document EP-A-0 466 039 discloses a method for comparing two images including ridges with each other wherein density value of each pixel of an image to be examined and of a reference image is calcutated, a direction with minimal change between each pixel and an adjacent one is calculated, the image to be examined and said reference image are divided into blocks, calculating an index according to the direction with minimal change as to each block; the index is used to judge if the image to be examined and said reference image substantially coincide with each other.

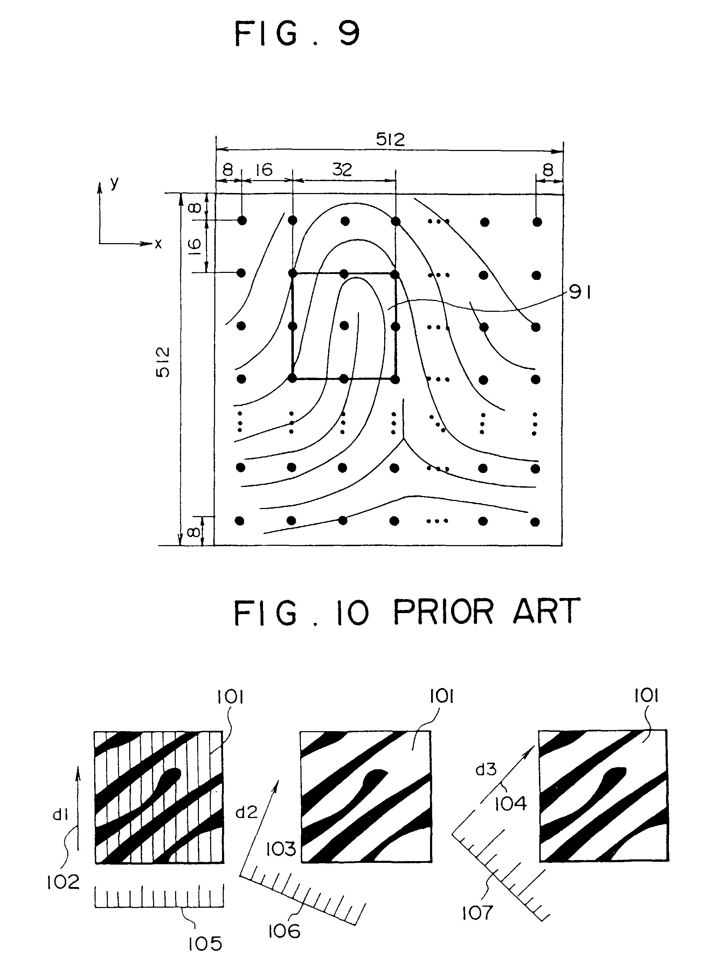

As another example of a heretofore known apparatus, a Japanese patent application JP-A-2 259 118 entitled "Apparatus for detecting ridge direction patterns" is briefly described in connection with Fig.10.

Suppose that 101 in Fig.10 represents a fingerprint image in a subregion around a sample point. And suppose that there are 8 (eight) quantized directions from 0° to 180° . A direction of 180° $+\alpha$ is, in this definition, equal to a direction of $\alpha$.

Thus, d1(102) in Fig.10 is a direction of 0° , d2(103) is a direction of 22.5° , and d3(104) is a direction of 45° . The fingerprint image 101 is scanned on 12(twelve) equally spaced lines parallel to the directions d1, d2, d3 respectively. Data of pixels on each scanning line are aggregated, and the total sum is represented by a length of a bar on the scanning line, as shown in bar graphs of 105, 106, 107. The direction d1(102) is nearly perpendicular to ridge directions, and almost all the scanning lines cross almost all the ridge lines, averaging the length of the bars. The direction d3 (104) is nearly parallel to the ridge directions, and some scanning line runs on a ridge making a large aggregated sum, and some scanning line runs on a space between two ridge lines making a small aggregated sum.

When the bar graphs of all the eight directions are completed, the difference between the highest bar and the lowest bar in a direction is calculated. The direction wherein the difference between the highest bar and the lowest bar is maximum is determined as the quantized ridge direction of the subregion.

From the foregoing descriptions, it will be easily understood that the heretofore known process is complicated and requires a large amount of operations. When the number of quantization levels is increased, the amount of operations must be increased. For example, when the number of quantized directions is increased from 8 to 16 directions in 0° - 180°, the amount of operations must be doubled.

Usually, a degree of trustworthiness, that is confidence, of the detected direction is also necessary for each determined ridge direction, because the confidence is important for smoothing ridge directions against interfering noises included in a fingerprint image. The heretofore known apparatus requires a complicated processing with a large amount of operations to determine the confidence of a detected ridge direction.

The present invention is defined, in its apparatus and method aspects, in Claims 1 and 10 respectively. Claims 2 to 9 define subsidiary features. The invention may also extend to method features analogous to these apparatus features.

Aims of at least preferred embodiments of the apparatus and method according to invention include:

(a) determining ridge direction patterns precisely by simple processes with small numbers of operations;
(b) determining ridge direction patterns wherein quantization levels can be increased as desired without additional operations;
(c) determining ridge direction patterns together with confidence for each determined ridge direction.
(d) determining ridge direction in a subregion from local distribution pattern of gradient vectors in a fingerprint picture image. A gradient vector of a point is composed of its X-component and Y-component. The X-component is obtained by differentiating the fingerprint picture image in an X direction and the Y-component is obtained by differentiating the fingerprint picture image in a Y direction. These differentiation operations are much simpler than the operations described in connection with Fig. 10;
(e) decreasing noise interference on ridge direction determination from noises included in a fingerprint picture image. This can be achieved by performing the differentiation for determining a gradient vector by a differentiation operator which is determined in accordance with spacing between ridge lines;
(f) providing adaptive process for analyzing distribution of gradient vectors and determining ridge directions. A multiple regression analysis can be employed to achieve this. Alternatively, principal component analysis is employed for analyzing the distribution of gradient vectors.

From a periodicity of a fingerprint pattern, it may be said that the average value of gradient vectors in an area which is calculated in a case using a principal component analysis approaches to 0 when the area is sufficiently large for patterns contained in the area. In an embodiment of this invention, the average value of gradient vectors is assumed to be 0, for the purpose of further simplifying the operation of the principal component analysis.

In analyzing the distribution of gradient vectors and determining ridge directions in this invention, the probability of trustworthiness of each determined ridge direction is also determined.

Further aims, features, and advantages of this invention will become apparent from a consideration of the following description, the appended claims, and the accompanying drawings in which the same numerals indicate the same or the corresponding parts. The description of preferred features of the invention is provided purely by way of example.

Fig. 1 shows a block diagram of an embodiment of the apparatus and method according to this invention.

Fig. 2 shows graphs illustrating performances of an apparatus according to Fig. 1.

Fig. 3 shows an example of kernels used for differentiation operation in the apparatus and method of this invention.

Fig. 4 shows another example of kernels used for differentiation operation in the apparatus and method of this invention.

Fig. 5 shows a graph illustrating ridge line pitch.

Fig. 6 shows a graph illustrating signal strength by contour lines as a function of ridge line pattern and a parameter for differentiation operation.

Fig.7 shows still another example of kernels used for differentiation operation in the apparatus and method of this invention.

Fig.8 shows still another example of kernels used for differentiation operation in the apparatus and method of this invention.

Fig. 9 shows a subregion in a fingerprint picture image.

Fig. 10 shows graphs illustrating performances of an apparatus of a prior art.

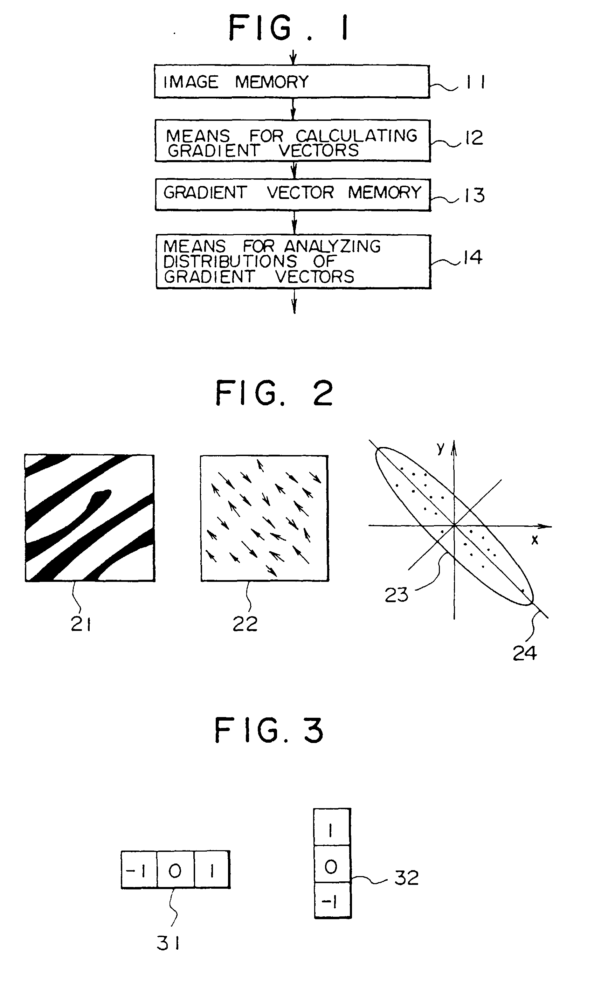

Now referring to Fig.1, an embodiment of the apparatus and method according to this invention comprises an image memory 11 for storing image data of such a skin surface pattern as a fingerprint, means 12 for calculating gradient vectors from the data stored in the image memory 11, a gradient vector memory 13 for storing data of gradient vectors calculated in the means 12 for calculating gradient vectors, and means 14 for analyzing distributions of gradient vectors which determines the distributions of gradient vectors and determines a ridge direction.

For a numerical example, the image memory 11 stores 512×512 pixel data, and a pixel data is denoted by f(x,y) where x, y(x=1, 2, ••••512;y=1, •••512) are the X-address number and Y-address number of the pixel data in the image memory 11, (x, y) corresponding to the coordinate position of the pixel in the picture.

Referring to Fig.9, 32×32 sample points are determined as shown by small black circles in Fig. 9. The X-Y address of the sample points are x=8, 24, 40, 56, ••504; y=8, 24, 40, 56, ••504. For each sample point (excluding outermost sample points) 32×32 pixel data area including the sample point in the center is determined as a subregion 91. Distributions of gradient vectors are analyzed for each subregion.

Now referring to Fig. 2, contents of the image memory 11 in a subregion are shown in a picture 21. If these contents are denoted by f(x, y), the gradient is expressed by

$$\mathrm{grad}f(x, y) = \begin{pmatrix} f_x(x, y) \\ \\ f_y(x, y) \end{pmatrix} = \begin{pmatrix} \partial f(x, y)/\partial x \\ \\ \partial f(x, y)/\partial y \end{pmatrix} \quad \cdots\cdot(1)$$

Since f(x,y) is a discrete function, the differentiation operation $\partial/\partial x$(in X direction) or $\partial/\partial y$(in Y direction) is performed by calculating convolution between the function f(x,y) and a kernel. There are various types of kernels. In the simplest case, a kernel 31 in Fig. 3 is used for $\partial/\partial x$ and a kernel 32 in Fig. 3 is used for $\partial/\partial y$.

Convolution between the kernels 31, 32 and the function f(x, y) means that

$$\partial f(x, y)/\partial x = f(x+1, y) - f(x-1, y)$$

**3**

$$\partial f(x, y)/\partial y=f(x, y+1)-f(x, y-1)$$

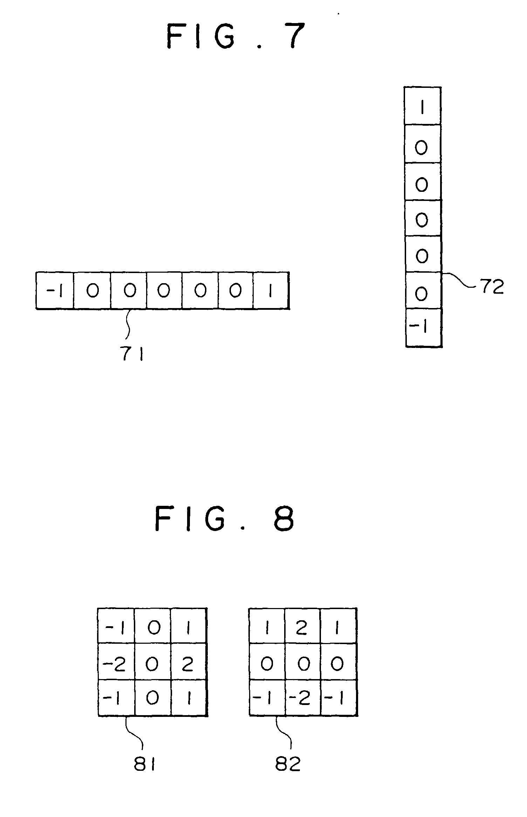

Fig. 8 shows another example of kernels, a kernel 81 in Fig. 8 being used for $\partial/\partial x$ and a kernel 82 in Fig. 8 being used for $\partial/\partial y$.

The gradient vectors thus calculated from the function f(x, y) (shown by 21 of Fig. 2) by means 12 for calculating gradient vectors, are shown by 22 of Fig. 2. These gradient vectors are stored in a gradient vector memory 13.

In an ordinary practice, gradient vectors are calculated for all $512\times512$ pixels and all the gradient vectors calculated are stored in the gradient vector memory 13. The means 14 for analyzing distributions of gradient vectors selects a subregion where $32\times32$ gradient vectors are included, and distribution analysis of gradient vectors is performed by multiple regression analysis.

The direction of the principal axis 24 is determined by a multiple regression analysis. At a point "i" in a subregion, components of a gradient vector are assumed $p_i=f_x (x, y)$ and $q_i=f_y (x, y)$. An energy function E(a, b) is expressed by

$$E(a, b)=\Sigma_i \left\| q_i -(ap_i+b)\right\|^2 \tag{2}$$

a vector

$$\begin{pmatrix} a \\ b \end{pmatrix}$$

which minimizes E is obtained to be

$$\begin{pmatrix} a \\ b \end{pmatrix} = \begin{pmatrix} \Sigma_i (p_i)^2 & \Sigma_i p_i \\ \Sigma_i p_i & \Sigma_i 1 \end{pmatrix}^{-1} \begin{pmatrix} \Sigma_i p_i q_i \\ \Sigma_i q_i \end{pmatrix} \quad \cdots(3)$$

The value of "a" obtained from the equation (3) represents a direction of the principal axis 24 and the ridge direction $\theta$ of the subregion is obtained from $\theta=\tan^{-1}(-1/a)\cdots(4)$. It must be noted that $\theta$ can be quantized as desired.

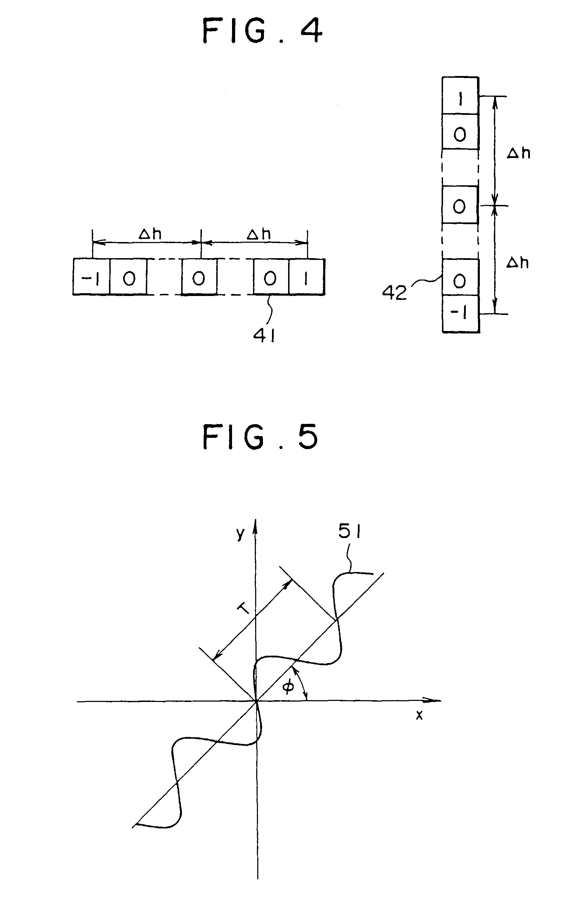

In some cases, signal to noise ratio of the gradient vectors can be improved when kernels adapted to ridge line pitch are employed for the differentiation operations. Referring to Fig. 5, it is assumed that a plane wave 51 on an x-y plane in a direction $\phi$ with a pitch T represents a ridge line pattern. Detected ridge line pattern f(x, y) can be expressed by

$$f(x, y)=\sin(\omega_x x+\omega_y y)+n(x, y) \tag{4}$$

where n(x, y) is a Gaussian noise, and

$$\omega=2\pi/T, \ \omega_x =\omega\cos\phi, \ \omega_y =\omega\sin\phi \tag{5}$$

Fig.4 shows a pair of kernels 41, 42 to be used, $\Delta h$ being a parameter to be determined in accordance with the ridge line pattern. When these kernels are used,

$$\partial f(x, y)/\partial x = \sin(\omega_x (x+\Delta h)+\omega_y y)+n(x+\Delta h, y)$$

$$-\sin(\omega_x (x-\Delta h)+\omega_y y)-n(x-\Delta h, y)$$

$$=\sin(\omega_x x+\omega_y y+\omega_x \Delta h)-\sin(\omega_x x+\omega_y y-\omega_x \Delta h)$$

$$+n(x+\Delta h, y)-n(x-\Delta h, y) \qquad (6)$$

$$\partial f(x, y)/\partial y = \sin(\omega_x x+\omega_y (y+\Delta h))+n(x, y+\Delta h)$$

$$-\sin(\omega_x x+\omega_y (y-\Delta h))-n(x, y-\Delta h)$$

$$=\sin(\omega_x x+\omega_y y+\omega_y \Delta h)-\sin(\omega_x x+\omega_y y-\omega_y \Delta h)$$

$$+n(x, y+\Delta h)-n(x, y-\Delta h) \qquad (7)$$

Substituting by $\alpha=\omega_x x+\omega_y y$, we obtain

$$\partial f(x, y)/\partial x = 2\cos\alpha\sin(\omega_x \Delta h)$$

$$+n(x+\Delta h, y)-n(x-\Delta h, y) \qquad (8\text{-}1)$$

$$\partial f(x, y)/\partial y = 2\cos\alpha\sin(\omega_y \Delta h)$$

$$+n(x, y+\Delta h)-n(x, y-\Delta h) \qquad (8\text{-}2)$$

Thus,

$$S = \begin{pmatrix} 2\cos\alpha\sin(\omega_x \Delta h) \\ \\ 2\cos\alpha\sin(\omega_y \Delta h) \end{pmatrix} \quad \cdots(9)$$

$$N = \begin{pmatrix} n(x+\Delta h, y)-n(x-\Delta h, y) \\ \\ n(x, y+\Delta h)-n(x, y-\Delta h) \end{pmatrix} \quad \cdots(10)$$

represents signal vector and noise vector respectively.
The signal power $\|S\|^2$ is calculated from equation(9)

$$\|S\|^2 = 4\cos^2 \alpha[\sin^2 (\omega_x \Delta h)+\sin^2 (\omega_y \Delta h)]$$

$$=4\cos^2 \alpha[1-\cos(\omega_x +\omega_y )\Delta h][\cos(\omega_x +\omega_y )\Delta h] \qquad (11)$$

Substituting $\omega_x$ and $\omega_y$ by equation(5), we obtain

$$\|S\|^2 = 4\cos^2 \alpha[1-\cos((\cos\phi + \sin\phi)\omega\Delta h)$$

$$\times \cos((\cos\phi + \sin\phi)\omega\Delta h)] \qquad (12)$$

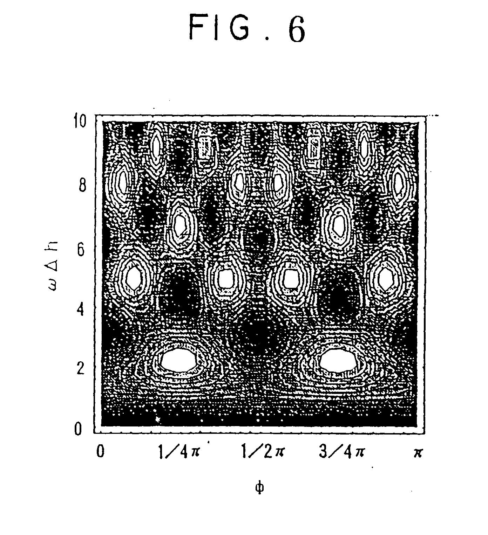

Fig. 6 shows $\|S\|^2$ by contour lines as a function of $\phi$ and $\omega\Delta h$. Brighter area means higher signal intensity (of calculated gradient). On the other hand, $\|N\|^2$ is independent of $\phi$ and $\omega\Delta h$, when the noise is a Gaussian noise. Therefore, when $\|S\|^2$ is increased, the signal to noise ratio is increased. It is apparent from Fig. 6 that $\omega\Delta h=1.0\sim2.0$ will give a best result wherein $\|S\|^2$ is high and less independent of $\phi$. $\omega\Delta h=1.0\sim2.0\cdots(13)$ means that $\Delta h=1.0/\omega\sim2.0/\omega\cdots(14)$ and $\Delta h=T/2\pi-T/\pi\cdots(15)$.

For a numerical example, when a fingerprint image is composed of 20 pixels per mm, a pair of kernels 71 and 72 in Fig. 7 give a best result.

Sometimes a pair of kernels are defined by functions $k_1 (x, y)$ and $k_2 (x, y)$ in a form

$$k_1 (x, y)=G(x, y;\sigma_1)\sin(\alpha_1 x) \qquad (16)$$

$$k_2 (x, y)=G(x, y;\sigma_2)\sin(\alpha_2 y) \qquad (17)$$

where G is a Gaussian function, $\sigma_1$ , $\sigma_2$ , $\alpha_1$, $\alpha_2$ are to be determined experimentally.

For such a pair of kernels, parameters $\alpha_1$ , $\alpha_2$ are to be determined in accordance with ridge line pitch T.

In another embodiment of the apparatus and method according to this invention, a principal component analysis is employed as means 14 for analyzing distribution of gradient vectors. When a subregion is denoted by C, the variance-covariance matrix of the subregion C is denoted by

$$V = \begin{pmatrix} \sigma_{xx} & \sigma_{xy} \\ & \\ \sigma_{xy} & \sigma_{yy} \end{pmatrix} \cdots (18)$$

where

$$\sigma_{pq} = \frac{1}{N} \sum_{(x, y)\in C} (f_p(x, y)-\overline{f_p(x, y)})(f_q(x, y)-\overline{f_q(x, y)})\cdots(19)$$

N being the total number of gradient vectors in the subregion C, p, q being either one of x or y, and $\overline{f_p (x, y)}$ and $\overline{f_q (x, y)}$ being mean values of $f_p (x,y)$ and $f_q (x,y)$ respectively.

Eigenvalues and eigenvectors of the matrix(18) are obtained as $\lambda_1$, $\lambda_2$ (eigenvalues and $\lambda_1 > \lambda_2$) and $e_1$ , $e_2$ (eigenvectors, $e_1$ corresponding to $\lambda_1$ and $e_2$ corresponding to $\lambda_2$ ).

When V is represented by

$$V = \begin{pmatrix} a & b \\ & \\ & \\ b & c \end{pmatrix} \qquad \cdots(20)$$

$$\lambda_1 = (a+c+d)/2 \qquad (21)$$

$$\lambda_2 = (a+c-d)/2 \qquad (22)$$

$$d = [(a-c)^2 + 4b^2]^{1/2} \qquad (23)$$

$$g_1 = [b^2 + (\lambda_1 - a)^2]^{1/2} \qquad (24)$$

$$g_2 = [b^2 + (\lambda_2 - a)^2]^{1/2} \qquad (25)$$

$$e_1 = \begin{pmatrix} b \\ & \\ & \\ \lambda_1 - a \end{pmatrix} / g_1 \qquad \cdots(26)$$

$$e_2 = \begin{pmatrix} b \\ & \\ & \\ \lambda_2 - a \end{pmatrix} / g_2 \qquad \cdots(27)$$

and $\theta = \arctan[(\lambda_2 - a)/b] \cdots(28) \quad 0 \leq \theta < \pi$
represents the ridge direction of the subregion.

As is apparent from equation(19), the variance-covariance matrix of equation(18) is a matrix of 2th moment around the mean values $(\overline{f_x (x,y)}, \overline{f_y (x, y)})$ of gradient vectors.

When C(equation (19)) is sufficiently large, the mean values of the gradient vectors become near to a zero vector. This fact is suggested by Fig. 2, where the center of the distribution 23 seems to be at the origin of the X-Y coordinates. When the mean values of the gradient vectors are assumed to be 0, the following equation is obtained;

$$M = NV$$

$$= \begin{pmatrix} \Sigma[f_x(x, y)]^2 & \Sigma[f_x(x, y)f_y(x, y)] \\ \\ \Sigma[f_x(x, y)f_y(x, y)] & \Sigma[f_y(x, y)]^2 \end{pmatrix} \cdots (29)$$

where, $(x, y) \in C$

Operation of the equation (29) is much simpler than that of the equation (18) and can be completed in less time.

In an embodiment of the apparatus and method according to this invention equation (29) is used, and M is represented by

$$M = \begin{pmatrix} a & b \\ \\ b & c \end{pmatrix} \cdots (30)$$

Then equations (21), (22), (23), (24), (25), (26), (27), (28) can be applied also for M, and $\theta$ is obtained for the matrix M.

In the apparatus and method according to this invention, confidence of $\theta$ of a subregion is easily determined. Returning to Fig. 2, a distribution of gradient vectors in a subregion is shown by an ellipse 23, and the direction of the principal axis 24 determines $\theta$ of the subregion. The length of the minor axis corresponds to the deviation from $\theta$. When noise or other interferences are superimposed on the fingerprint image, the length of the minor axis will be increased.

Hence, confidence of $\theta$ may be represented by a function of $\lambda_1$ and $\lambda_2$ (Equations (21), (22)). For example, the confidence R is defined by $R = \sqrt{\lambda_1} - \sqrt{\lambda_2} \cdots (31)$, or, when R is to be normalized, R is defined by

$$R = [2\sqrt{\lambda_1} /(\sqrt{\lambda_1} + \sqrt{\lambda_2})] - 1 \qquad (32)$$

In summary, in the preferred embodiment of apparatus and method according to the present invention, from an image memory of a fingerprint picture, gradient vectors of the picture are calculated. From the distribution of gradient vectors in a subregion, ridge direction of the subregion is determined, and confidence of the determined direction is also defined.

It will be understood that the present invention has been described above purely by way of example, and modifications of detail can be made within the scope of the invention as set out in the appended claims.

**Claims**

1. An apparatus for determining ridge direction patterns comprising:

an image memory (11) for storing image pixel data denoted by f(x,y) representative of a skin surface picture image at a memory address corresponding to a coordinate position (x,y) of a pixel in said picture;

means for calculating gradient vectors (12 from data stored in said image memory, the x-component and y-component of said gradient vector at a position (x,y) being defined as $\partial f(x,y)/\partial x$ and $\partial f(x,y)/\partial y$ respectively;

a gradient vector memory (13) for storing calculated gradient vectors at a memory address corresponding to said position (x,y); and

means for analysing distributions of gradient vectors (14) in a selected subregion around a sample point of said picture to determine ridge direction of the subregion and said apparatus being characterized in that said means for analyzing distributions of gradient vectors are also used to define confidence of the determined direction.

**2.** An apparatus according to Claim 1, wherein the analyzing means is adapted to determine a direction perpendicular to the principal axis of a distribution in a subregion as a ridge direction of said subregion.

**3.** An apparatus according to any preceding Claim, wherein:
said means for calculating gradient vectors is adapted to calculate gradient vector components $\partial f(x,y)/\partial x$ and $\partial f(x,y)/\partial y$ by:

$$\partial f(x, y))/\partial x = f(x+\Delta h,y)-f(x-\Delta h,y)$$

$$\partial f(x,y)/\partial y = f(x,y+\Delta h)-f(x,y-\Delta h)$$

and $\Delta h$ is determined to be $T/2\pi \sim T/\pi$, where T is a ridge line pitch in a subregion.

**4.** An apparatus according to Claim 1, or 2, wherein:
said means for analyzing distributions of gradient vectors is adapted to calculate said direction of the principal axis of said distribution in a subregion by a multiple regression analysis in which an energy function $E(a,b)$ is defined by $E(a,b)=\Sigma\|q_i -(ap_i +b)\|^2$ where $p_i$ and $q_i$ respectively represent $\partial f(x,y)/\partial x$ and $\partial f(x,y)/\partial y$ at point i in a subregion and $\Sigma$ means summation for all points i in said subregion; values of variables a,b which minimize said energy function are obtained; and, from the value of 'a', said ridge direction of said subregion is determined.

**5.** An apparatus according to any of the preceding claims, wherein:
said means for analyzing distributions of gradient vectors is adapted to calculate said direction by a principal component analysis in which the variance-covariance matrix of gradient vectors in said subregion is determined; eigenvalues $\lambda_1 ,\lambda_2 , (\lambda_1 >\lambda_2 )$ and eigenvectors $e_1 , e_2$ are determined from said matrix, and from these eigenvalues and eigenvectors said ridge direction of said subregion is determined.

**6.** An apparatus according to Claim 4, wherein:
said means for analyzing distributions of gradient vectors is adapted to calculate said direction by a principal component analysis in which mean values of x-components and y-components of said gradient vectors in a subregion are assumed to be zero.

**7.** An apparatus according to Claim 5 or 6, wherein:
said means for analyzing distributions of gradient vectors is adapted to calculate said direction by a principal component analysis in which confidence of a ridge direction of a subregion is determined as a function of said eigenvalues.

**8.** An apparatus according to Claim 7, wherein:
said confidence R of a ridge direction of a subregion is defined by $R=[2\sqrt{\lambda_1}/(\sqrt{\lambda_1} + \sqrt{\lambda_2})]-1$.

**9.** An apparatus according to claim 7, wherein said confidence R of a ridge direction of a subregion is defined by $R=\sqrt{\lambda_1} - \sqrt{\lambda_2}$.

**10.** A method of determining ridge direction patterns comprising:

storing image pixel data denoted by f(x,y) representative of a skin surface picture image at a memory address corresponding to a coordinate position (x,y) of a pixel in said picture;
calculating gradient vectors (12) from the stored image data, the x-component and y-component of said gradient vector at a position (x,y) being defined as $\partial f(x,y)/\partial x$ and $\partial f(x,y)/\partial y$ respectively;
storing calculated gradient vectors at a memory address corresponding to said position (x,y); and
analyzing distributions of gradient vectors (14) in a selected subregion around a sample point of said picture to determine ridge of the subregion and said method being characterized in that analyzing distributions of gradient vectors in said subregion is also used to define confidence of the determined direction.

**Patentansprüche**

1. Vorrichtung zum Bestimmen von Höhenrückenrichtungsmustern, die aufweist:

   einen Bildspeicher (11) zum Speichern von Bildpixeldaten, die durch f(x,y) bezeichnet sind und für das Bild einer Hautoberfläche repräsentativ sind, bei einer Speicheradresse, die einer Koordinatenstelle (x,y) eines Pixels in dem Bild entspricht;

   Mittel zum Berechnen von Gradientenvektoren (12) von Daten, die in dem Bildspeicher gespeichert sind, wobei die x-Komponente und die y-Komponente des Gradientenvektors an einer Stelle (x,y) definiert sind als $\partial f(x,y)/\partial x$ und $\partial f(x,y)/\partial y$;

   einen Gradientenvektorspeicher (13) zum Speichern von berechneten Gradientenvektoren an einer Speicheradresse, die der Stelle (x,y) entspricht; und

   Mittel zum Analysieren von Verteilungen von Gradientenvektoren (14) in einem ausgewählten Unterbereich um einen Probepunkt des Bilds, um Höhenrückenrichtung des Unterbereichs zu bestimmen, und wobei die Vorrichtung dadurch gekennzeichnet ist, daß die Mittel zum Analysieren von Verteilungen von Gradientenvektoren auch dafür benutzt werden, die Zuverlässigkeit der bestimmten Richtung zu definieren.

2. Vorrichtung nach Anspruch 1, bei der die Analysiermittel dazu ausgebildet sind, eine Richtung senkrecht zur Hauptachse einer Verteilung in einem Unterbereich als eine Höhenrückenrichtung des Unterbereichs zu bestimmen.

3. Vorrichtung nach einem vorangehenden Anspruch, bei dem:
   die Mittel zum Berechnen von Gradientenvektoren dazu ausgebildet sind, Gradientenvektorkomponenten $\partial f(x,y)/\partial x$ und $\partial f(x,y)/\partial y$ durch:

   $$\partial f(x,y)/\partial x = f(x+\Delta h,y)-f(x-\Delta h,y)$$

   $$\partial f(x,y)/\partial y = f(x,y+\Delta h)-f(x,y-\Delta h)$$

   zu bestimmen und $\Delta h$ als $T/2\pi \sim T/\pi$ bestimmt wird, wobei T ein Höhenrückenlinienabstand in einem Unterbereich ist.

4. Vorrichtung nach Anspruch 1 oder 2, bei der:
   die Mittel zum Analysieren von Verteilungen von Gradientenvektoren dazu ausgebildet sind, die Richtung der Hauptachse der Verteilung in einem Unterbereich durch eine Vielfachregressionsanalyse zu bestimmen, bei der eine Energiefunktion E(a,b) definiert wird durch $E(a,b)=\Sigma\|q_i-(ap_i+b)\|^2$, wobei $p_i$ und $q_i$ $\partial f(x,y)/\partial x$ und $\partial f(x,y)/\partial y$ bei Punkt i in einem Unterbereich darstellen und $\Sigma$ die Summierung über alle Punkte i in dem Unterbereich bedeutet; Werte von Variablen a, b erhalten werden, die die Energiefunktion minimalisieren; und vom Wert von "a" die Höhenrückenrichtung des Unterbereichs bestimmt wird.

5. Vorrichtung nach einem der vorangehenden Ansprüche, bei der
   die Mittel zum Analysieren von Verteilungen von Gradientenvektoren dazu ausgebildet sind, die Richtung durch eine Hauptkomponentenanalyse zu bestimmen, bei der die Varianz-Kovarianz-Matrix der Gradientenvektoren in dem Unterbereich bestimmt wird; Eigenwerte $\lambda_1$, $\lambda_2(\lambda_1>\lambda_2)$ und Eigenvektoren $e_1$ und $e_2$ aus der Matrix bestimmt werden und von diesen Eigenwerten und Eigenvektoren die Höhenrückenrichtung des Unterbereichs bestimmt wird.

6. Vorrichtung nach Anspruch 4, bei der:
   die Mittel zum Analysieren von Verteilungen von Gradientenvektoren dazu ausgebildet sind, die Richtung durch eine Hauptkomponentenanalyse zu berechnen, bei der Mittelwerte von x-Komponenten und y-Komponenten der Gradientenvektoren in einem Unterbereich als null angenommen werden.

7. Vorrichtung nach Anspruch 5 oder 6, bei der:
   die Mittel zum Analysieren von Verteilungen von Gradientenvektoren dazu ausgebildet sind, die Richtung durch

# EP 0 696 012 B1

eine Hauptkomponentenanalyse zu berechnen, bei der die Zuverlässigkeit einer Höhenrückenrichtung eines Unterbereichs als eine Funktion der Eigenwerte bestimmt wird.

8. Vorrichtung nach Anspruch 7, bei der
die Zuverlässigkeit R der Höhenrückenrichtung eines Unterbereiches definiert wird durch R=[2√$\lambda_1$/(√$\lambda_1$+√$\lambda_2$)]-1.

9. Vorrichtung nach Anspruch 7, bei der
die Zuverlässigkeit R einer Höhenrückenrichtung eines Unterbereiches definiert wird durch R=√$\lambda_1$-√$\lambda_2$.

10. Verfahren zum Bestimmen von Höhenrückenrichtungsmustern, das aufweist:

Bildpixeldaten, die durch f(x,y) bezeichnet sind, die für das Bild einer Hauptoberfläche repräsentativ sind, an einer Speicheradresse zu speichern, die einer Koordinatenstelle (x,y) eines Pixels in dem Bild entsprechen;

Gradientenvektoren (12) aus den gespeicherten Bilddaten zu berechnen, wobei die x-Komponente und die y-Komponente des Gradientenvektors an einer Stelle (x,y) als ∂f(x,y)/∂x und ∂f(x,y)/∂y definiert sind;

die berechneten Gradientenvektoren bei einer Speicheradresse zu speichern, die der Stelle (x,y) entspricht; und

die Verteilungen der Gradientenvektoren (14) in einem ausgewählten Unterbereich um einen Probepunkt des Bildes zu analysieren, um Höhenrückenrichtung des Unterbereichs zu bestimmen, und welches Verfahren dadurch gekennzeichnet ist, daß Analysieren von Verteilungen von Gradientenvektoren in dem Verfahren ebenfalls verwendet wird, um die Zuverlässigkeit der bestimmten Richtungen zu definieren.

**Revendications**

1. Appareil de détermination de direction de crête de formes comprenant:

- une mémoire d'image (11) pour mémoriser les données de pixels d'une image représentées par f(x,y) représentatives d'une image de surface de peau à une adresse mémoire correspondant à une position de coordonnées (x,y) d'un pixel dans ladite image;
- un moyen pour calculer des vecteurs gradients (12) à partir des données mémorisées dans ladite mémoire d'image, la composante x et la composante y dudit vecteur gradient à une position (x,y) étant définies respectivement par ∂f(x,y)/∂x et ∂f(x,y)/∂y;
- une mémoire de vecteur gradient (13) pour mémoriser les vecteurs gradients calculés à une adresse de mémoire correspondant à ladite position (x,y); et
- un moyen pour analyser les distributions des vecteurs gradients (14) dans une sous-région choisie autour d'un point échantillon de ladite image pour déterminer la direction de crête de la sous-région et ledit appareil étant caractérisé en ce que ledit moyen pour analyser les distributions des vecteurs gradients est également utilisé pour définir le degré de confiance de la direction déterminée.

2. Appareil selon la revendication 1, dans lequel le moyen d'analyse est adapté pour déterminer une direction perpendiculaire à l'axe principal d'une distribution dans une sous-région comme direction de crête de ladite sous-région.

3. Appareil selon l'une quelconque des revendications précédentes, dans lequel:

- ledit moyen pour calculer les vecteurs gradients est adapté pour calculer les composantes des vecteurs gradients
∂f(x,y)/∂x et ∂f(x,y)/∂y par:

$$\partial f(x,y)/\partial x = f(x + \Delta h,y) - f(x - \Delta h,y)$$

$$\partial f(x,y)/\partial y = f(x,y + \Delta h) - f(x,y - \Delta h)$$

**11**

et $\Delta$h est déterminé pour être T/2$\pi$-T/$\pi$, où T est un pas de ligne de crête dans une sous-région.

4. Appareil selon la revendication 1 ou 2, dans lequel:

- ledit moyen pour analyser les distributions des vecteurs gradients est adapté pour calculer ladite direction de l'axe principal de ladite distribution dans une sous-région par une analyse à régression multiple dans laquelle une fonction énergie E(a,b) est définie par E(a/b) = $\Sigma \|q_i - (ap_i +b)\|^2$ où $p_i$ et $q_i$ représentent respectivement $\partial f(x,y)/\partial x$ et $\partial f(x,y)/\partial y$ au point i dans une sous-région et $\Sigma$ signifie la somme pour tous les points i dans ladite sous-région ; les valeurs de variables a,b qui minimisent ladite fonction énergie sont obtenues; et, d'après la valeur de "a", ladite direction de crête de ladite sous-région est déterminée.

5. Appareil selon l'une quelconque des revendications précédentes, dans lequel:

- ledit moyen pour analyser les distributions des vecteurs gradients est adapté pour calculer ladite direction par une analyse de composante principale dans laquelle la matrice variance-covariance des vecteurs gradients dans ladite sous-région est déterminée; les valeurs propres $\lambda_1$, $\lambda_2$ ($\lambda_1 > \lambda_2$) et les vecteurs propres $e_1$, $e_2$ sont déterminés à partir de ladite matrice, et d'après ces valeurs propres et ces vecteurs propres, ladite direction de crête de ladite sous-région est déterminée.

6. Appareil selon la revendication 4, dans lequel:

- ledit moyen pour analyser les distributions des vecteurs gradients est adapté pour calculer ladite direction par une analyse de composante principale dans laquelle les valeurs moyennes des composantes x et des composantes y desdits vecteurs gradients dans une sous-région sont supposées être nulles.

7. Appareil selon la revendication 5 ou 6, dans lequel:

- ledit moyen pour analyser les distributions des vecteurs gradients est adapté pour calculer ladite direction par une analyse de composante principale dans laquelle le degré de confiance d'une direction de crête d'une sous-région est déterminée en fonction desdites valeurs propres.

8. Appareil selon la revendication 7, dans lequel: ledit degré confiance R d'une direction de crête d'une sous-région est définie par R=$[2\sqrt{\lambda_1}/(\sqrt{\lambda_1} + \sqrt{\lambda_2})]$-1 .

9. Appareil selon la revendication 7, dans lequel ledit degré de confiance R d'une direction de crête d'une sous-région est définie par R=$\sqrt{\lambda_1}$ - $\sqrt{\lambda_2}$.

10. Procédé de détermination de direction de crête de formes consistant:

- à mémoriser des données de pixels d'image représentées par f(x,y) représentatives d'une image de surface de peau à une adresse mémoire correspondant à une position de coordonnées (x,y) d'un pixel dans ladite image;
- à calculer les vecteurs gradients (12) d'après les données d'image mémorisées, la composante x et la composante y dudit vecteur gradient à une position (x,y) étant définies respectivement par $\partial f(x,y)/\partial x$ et $\partial f(x,y)/\partial y$ ;
- à mémoriser les vecteurs gradients calculés à une adresse mémoire correspondant à ladite position (x,y); et
- à analyser les distributions des vecteurs gradients (14) dans une sous-région choisie autour d'un point échantillon de ladite image pour déterminer la direction de crête de la sous-région et ledit procédé étant caractérisé en ce que l'analyse des distributions des vecteurs gradients dans ladite sous-région est également utilisée pour définir le degré de confiance de la direction déterminée.

# FIG. 1

IMAGE MEMORY ~ 11

↓

MEANS FOR CALCULATING GRADIENT VECTORS ~ 12

↓

GRADIENT VECTOR MEMORY ~ 13

↓

MEANS FOR ANALYZING DISTRIBUTIONS OF GRADIENT VECTORS ~ 14

↓

# FIG. 2

# FIG. 3

| -1 | 0 | 1 |
|---|---|---|

31

| 1 |
|---|
| 0 |
| -1 |

~ 32

# FIG . 4

41

42

$\Delta h$

# FIG . 5

51

# FIG . 6

# FIG. 7

| -1 | 0 | 0 | 0 | 0 | 0 | 1 |
|----|---|---|---|---|---|---|

71

| 1 |
|---|
| 0 |
| 0 |
| 0 |
| 0 |
| 0 |
| -1 |

72

# FIG. 8

| -1 | 0 | 1 |
|----|---|---|
| -2 | 0 | 2 |
| -1 | 0 | 1 |

81

| 1 | 2 | 1 |
|---|---|---|
| 0 | 0 | 0 |
| -1 | -2 | -1 |

82

# FIG . 9

# FIG . 10 PRIOR ART

17